# EUROPEAN PATENT APPLICATION

(11) **EP 1 760 382 A2**
(43) Date of publication of application: **07.03.2007**
(21) Application number: 06119518.6
(22) Date of filing: 25.08.2006
(51) Int. Cl.: F16L 19/02

(54) **Pipe connection with swivel nut**

(30) Priority: 31.08.2005 NO 20054055; 26.09.2005 NO 20054446; 17.02.2006 NO 20060792
(71) Applicant: OSO Hotwater AS, 3301 Hokksund (NO)
(72) Inventor: Braathen, Thor Frölich, NO-3359, Eggedal (NO); Braathen, Chris Reidar Frölich, NO-0759, Oslo (NO)
(74) Representative: Karlström, Lennart

(57) **Abstract**

Connection for connecting a fitting to a water heater or other types of pressure tank. The connection comprises an adapter (5) for permanent fitting to the tank, where the adapter (5) and the fitting comprise complimentary formed parts, namely a holder (34) and a pipe stub (1). The holder and the pipe stub each have a through boring to provide a fluid connection between the tank and the fitting. A nut (27) is screwed onto the holder. The pipe stub (1) comprises a locking groove for engagement of a locking ring (25). The nut (27) is arranged to prevent the locking ring (25) from moving axially in relation to the holder (34), so that the pipe stub (1) is prevented from moving axially in relation to the holder (34).

## Description

The present invention relates to a connection for connecting a fitting to a water heater or other types of pressure tanks, in accordance with the ingress of the subsequent claim 1. The invention also relates to parts of the connection in accordance with the ingress of claims 11 and 12, respectively.

In the following, fitting is meant to cover all types of valves, connecting pieces, branches, pipe parts or the like, that are desirable to connect to a pressure tank.

Today, it is common to connect fittings to pressure tanks by a nut being rotary fastened to the fitting or an adapter on the tank in such a way that it cannot slip off the fitting or adapter. The nut is then screwed onto a threaded part of the opposite part and is tightened with a relatively large torque.

Such a connection cannot be disconnected without the help of tools. There will still be a risk for leaks if the nut is not sufficiently tightened. When the fitting shall be fitted, it must be rotated to the correct position before the nut is tightened completely. This means that the fitting will not be fitted before the pressure tank is in its intended place.

The present invention aims to provide a connection that simplifies the fitting. This is achieved by the features that appear in the characteristic part of the subsequent claim 1.

With the present invention it is achieved that it is possible to fit the fitting tightly and securely to the tank but it is still possible to rotate the fitting 360° to the right position. The position of the fitting is finally locked when the tank is pressurised.

The fitting can be fitted with the help of fully automatic equipment already during the production of the pressure tank.

It is possible to fit and remove the fitting by hand without the use of tools or with minimal use of tools and without much force being applied.

The invention shall now be explained in more detail with reference to the enclosed figures, in which:
Figure 1 shows a connection according to the present invention in a first embodiment,
Figures 2 - 6 show a sequence of how the connection of a fitting takes place with the help of the connection in figure 1,
Figure 7 shows a detail of the connection in figure 1,
Figure 8 shows a second embodiment of the present invention,
Figures 9 - 13 show a third embodiment of the present invention,
Figure 14 shows a fourth embodiment of the invention, and
Figure 15 shows a fifth embodiment of the invention.

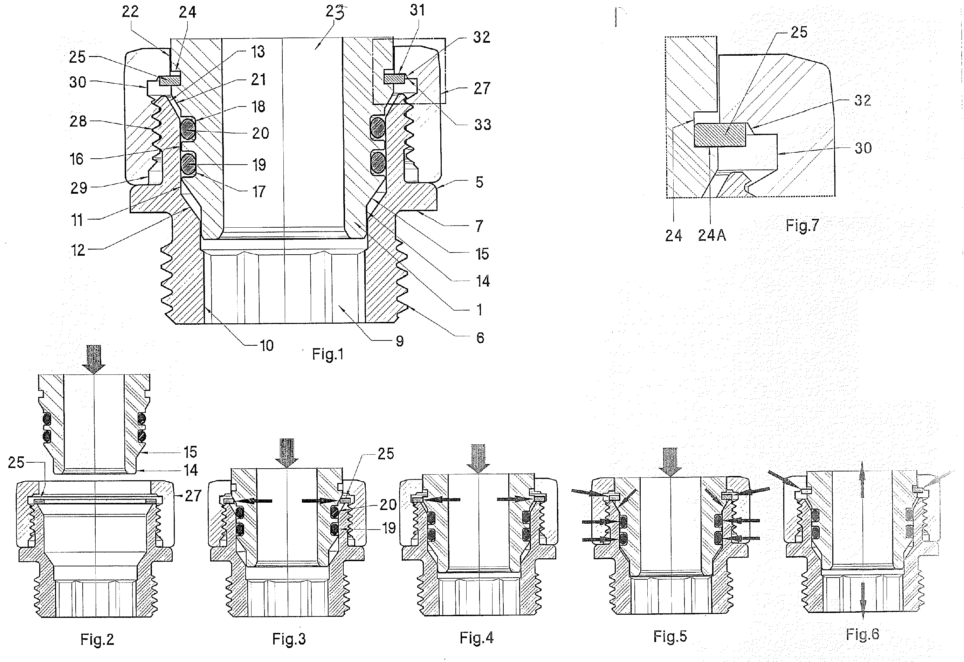

A first embodiment of the present invention is shown in figure 1. Here, a part of a valve housing is shown in the form of a pipe stub 1 and adapter 5 that is adapted to receive the pipe stub 1 internally. The adapter 5 is fitted with a first threaded section 6 for connection to a hot water tank (not shown), for example via threads formed in the wall of the tank, as described in Norwegian Patent Application no 2004 1923. The adapter 5 comprises a flange 7 that forms a contact surface against the wall of the tank. Opposite to the threads 6, the adapter 5 is fitted with a second threaded section 8.

The adapter 5 has a through boring 9 which, inside the first threaded section 6, is made up of a first straight boring section 10 and, inside the second threaded section 8, is made up of a second straight boring section 11 with a larger diameter than the first boring section 10. A conical section 12 extends between the first and the second boring sections 10, 11. There is also a conical section 13 at the extreme end of the second boring section 11. The part of the adapter 5 that encompasses the second threaded section 8 and the second straight boring section 11 functions as a holder for the connection.

The pipe stub 1 on the valve housing has, at its extreme end, a first straight external section 14 that goes over into a first conical external section 15, which in turn goes into a second straight external section 16 with a larger diameter than the first external section 14. The second straight external section 16 is fitted with two ring-grooves 17 and 18, each of which has room for an O-ring 19 and 20.

Furthermore, the second straight external section 16 goes into a second conical section 21, which in turn goes into a third straight external section 22 with a larger diameter than the second straight external section 16. The third external section 22 is fitted with a ring groove 24 for a locking ring 25. The locking ring is made up of a retaining ring that is split so that the diameter can be enlarged. A bore 23 extends through the pipe stub 1. The pipe stub 1 is further integrated with a valve housing that can be of any type, in itself known, that shall be connected to the tank.

A locking nut 27 is in threaded engagement with the second threaded section 8 on the adapter 5 at a threaded section 28 on the nut. Externally, the nut can be fitted with grooves or the like (not shown) to provide good friction when tightened manually.

Internally, the nut 27 has a first section 29 facing the flange 7, said section having a larger diameter than the threaded nut section 28. On the other side of the threaded section 28, the nut also has a section 30 of a larger diameter than the threaded section 28. At the end that faces away from the flange 7, the nut 27 has an inwardly directed flange 31. At the side of the flange 31 that faces the section 30, the flange has a recess 32 that is bordered by a shoulder 33.

The connection of the pipe stub 1 and the adapter 5 shall now be explained with reference to the figures 2 - 6. When disconnected, the nut 27 sits on the second threaded section 8 of the adapter 5. Between the adapter 5 and the inwardly facing flange 31 lies the locking ring 25. This lies loosely on top of the end surface of the adapter 5.

When the valve housing with the pipe stub 1 is led into the adapter, it will enter with the first straight section 14 of the smallest diameter. This section functions as a surface of entry and centres the pipe stub 1 in relation to the adapter 5. The second straight section 16 passes through the locking ring 25 that has a larger internal diameter then the external diameter of the O-rings 19,20. Thereby, the second conical section 21 meets the locking ring 25. The conical section 21 will expand the locking ring 25 and force this into the hollow space that is formed by the section 30 of the nut so that the third straight section 22 can be led into the locking ring 25. At about the same time, the pipe stub 1 enters the first straight boring section 10 in the adapter 5 with the first straight section 14. The pipe stub 1 is thereby centred in the adapter 5. When the groove 23 aligns with the locking ring 25, the locking ring 25 snaps into this. A clear click can be heard and the fitter will know that the valve has been fitted correctly. The O-rings 19, 20 are then forming a seal against the second straight boring section 11 in the adapter 5.

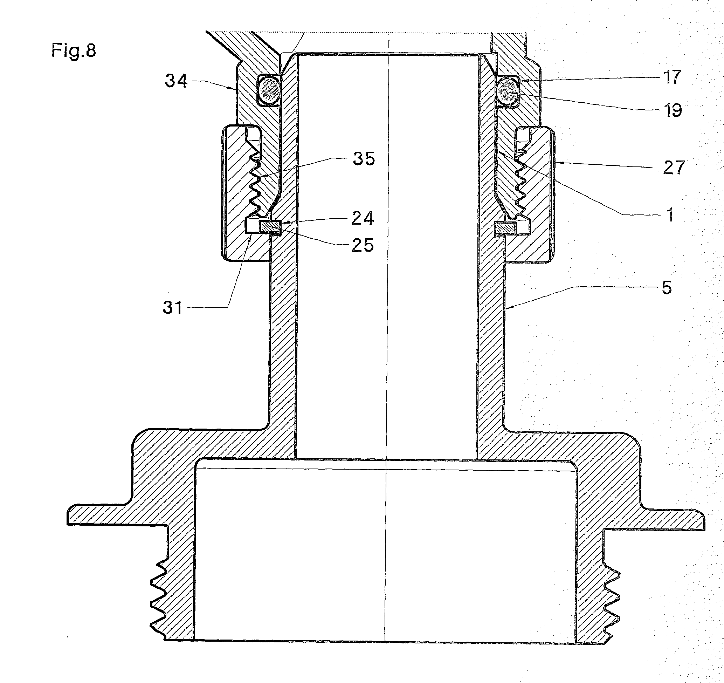

When the tank is pressurised, the pressure will ensure that the valve housing is somewhat lifted in relation to the adapter 5, as shown in figure 6. The locking ring 25 will then be squeezed between one of the walls in the groove 24 and the nut flange 31. Figure 7 shows this in detail. The locking ring is here lying squeezed between the wall 24a of the groove 24 and the underside of the flange 31, where the recess 32 is formed. The recess 32 has a diameter adapted to the diameter of the locking ring 25 when this lies in the groove 24, i.e. when the locking ring is not stressed, so that the locking ring in the position shown in the figures 6 and 7 can not move radially outwards. Thus, it is ensured that the locking ring is securely engaged with the groove 24 and the connection has no possibility of becoming loose.

If the pipe stub 1 shall be released from the adapter 5, the nut 27 must be made loose. This is preferably tightened manually and will therefore be able to be made loose manually or by gentle force from a tool, for example a pipe spanner. The nut 27 is unscrewed from the second threaded section 8. Thereby, the valve housing with the pipe stub 1 can be pulled out of the adapter 5. The locking ring 25 will still sit in the groove 24 and before the valve is fitted again the locking ring 25 must be flipped out of the groove 24. The nut 27 and the locking ring 25 are thereafter fitted on the adapter as shown in figure 2, so that the pipe stub can again be led into snapping engagement with the adapter 5.

Figure 8 shows a second embodiment of the invention. The principles of this embodiment are the same as for the embodiment above. Thus, only the differences will be explained, as a person skilled in the art will understand that this second embodiment will, in all respects, have the same features as the first embodiment. Here, the adapter 5 that is to be fastened to the tank is equipped with a pipe stub 1. This comprises a groove 24 for a locking ring 25. The valve housing is fitted with a holder 34 that, externally, has a threaded section 35 and, internally, has a groove 17 for an O-ring 19. A nut 27 is screwed onto the threaded section 35 and the locking ring 25 is placed between the end of the holder 34 and the flange 31 of the nut 27. The pipe stub 1 is thereafter led into the holder until the locking ring 25 snaps into place in the groove 24.

It will be understood that even if only one O-ring is shown in figure 8, one can also use two O-rings. Two O-rings will offer better safety against leaks. When the valve housing moves forward and backward in the adapter 5 as a consequence of the pressure increasing and decreasing, some fluid will be able to penetrate past the one O-ring. The other O-ring will ensure that this fluid cannot leak out completely.

One sees in figure 8 that there is no hollow made on the inside of the flange 31 of the nut 27. This might give a smaller degree of safety against unintended disconnection of the valve housing, but will function satisfactorily in most situations. However, a hollow on the flange of the nut will mean that the connection is at least as safe as the conventional connections used today.

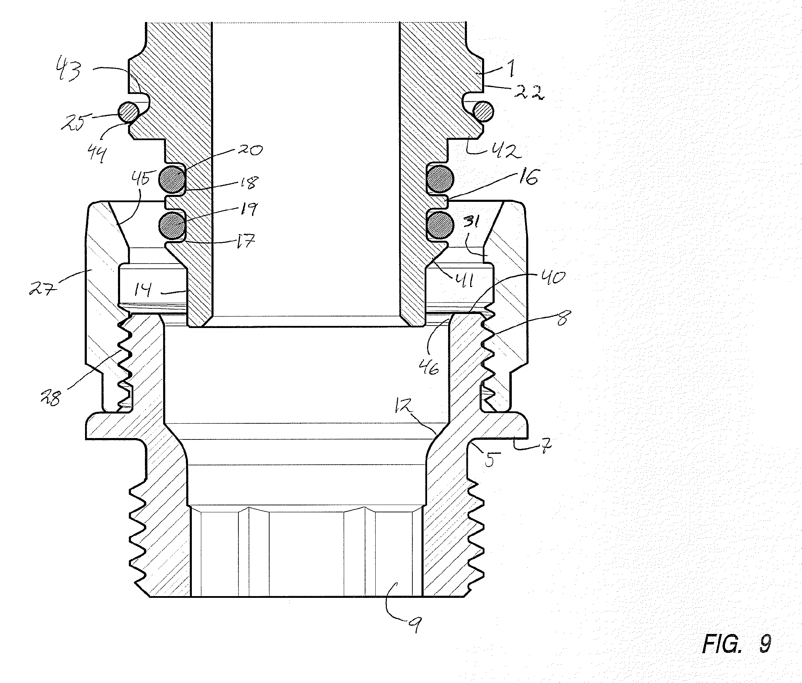

A third and presently preferred embodiment of the present invention is shown in the figures 9 - 13. Here, a part of a valve housing is also shown, having a pipe stub 1 and an adapter 5 that is adapted to receive the pipe stub 1 inside. The adapter 5 is formed, by and large, as the adapter described in connection with figure 1. However, it has one straight end 40 with a small rounded tip 46 against the valve housing instead of the conical section 13.

The pipe stub 1 of the valve housing is somewhat differently formed than according to the embodiment shown in figure 1. At its extreme end it has a first straight external section 14 that runs into a conical section 41. A second straight section 16 follows thereafter. Two grooves 17, 18 for O-rings 19,20, respectively, are formed in the straight section 16. The second straight section 16 goes into a downwardly directed shoulder 42. The shoulder 42 leads to a third straight external section 22 with a larger diameter than the second external section 16.

The third straight external section 22 is fitted with a ring groove 24 for a locking ring 25. The locking ring 25 is made up of a retaining ring with a circular or rounded cross section, which is split so that the diameter can be expanded. The groove 24 has an upper sidewall 43 that extends radially in relation to the longitudinal axis of the pipe stub 1 and a lower sidewall 44 that extends diagonally downwards. A boring 23 extends through the pipe stub 1.

A locking nut 27 stands in the same way as in the embodiment in figure 1, in threaded engagement with the second threaded section 8 of the adapter 5 at a nut threaded section 28. However, the nut is formed somewhat differently from the nut in figure 1, as the flange 31 has a conical boring 45 facing the pipe stub 1. The boring 45 tapers from above in towards the pipe stub 1 and forms an acute angle with the longitudinal direction of the pipe stub. A small shoulder 33 is on the underside of the flange 31.

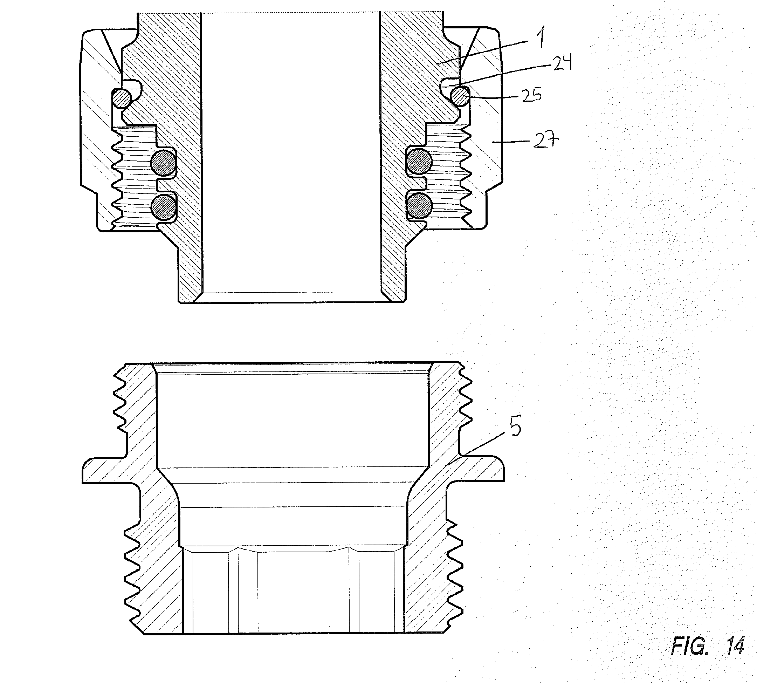

The connection of the pipe stub 1 and the adapter 5 shall now be explained with reference to the figures 9 - 13 and disconnection with reference to figure 14. When disconnected the nut 27 sits on the second threaded section 8 of the adapter 5, in the same way as explained in connection with figure 1. However, the locking ring 25 is now placed in the groove 24 in advance.

When the valve housing with the pipe stub 1 is led into the adapter, it will first enter with the first straight section 14, which functions as a guiding for the pipe stub. Thereafter, the conical section 41 will enter and centre the pipe stub 1 in relation to the adaptor 5 in that the conical section 41 meets the rounding off 46. The centring also takes place in that the pipe stub meets the conical section 12.

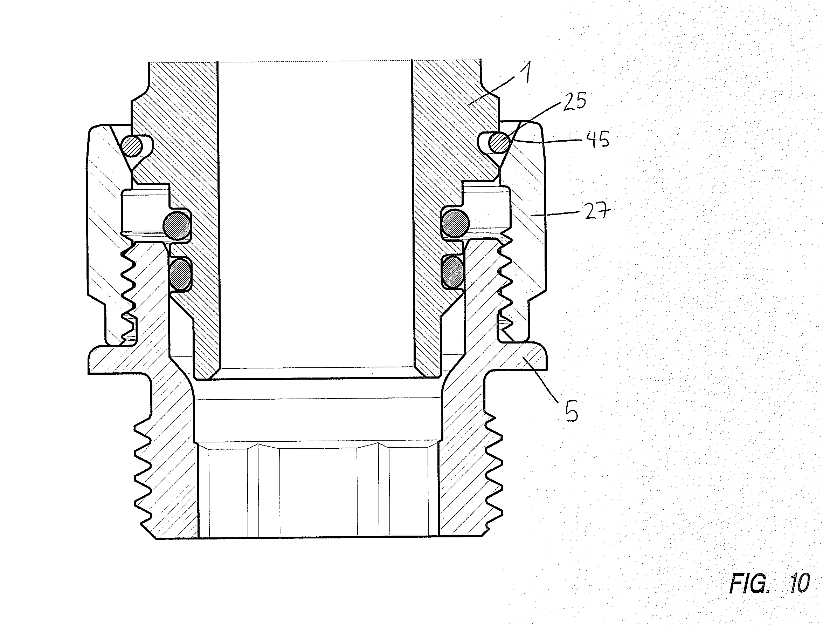

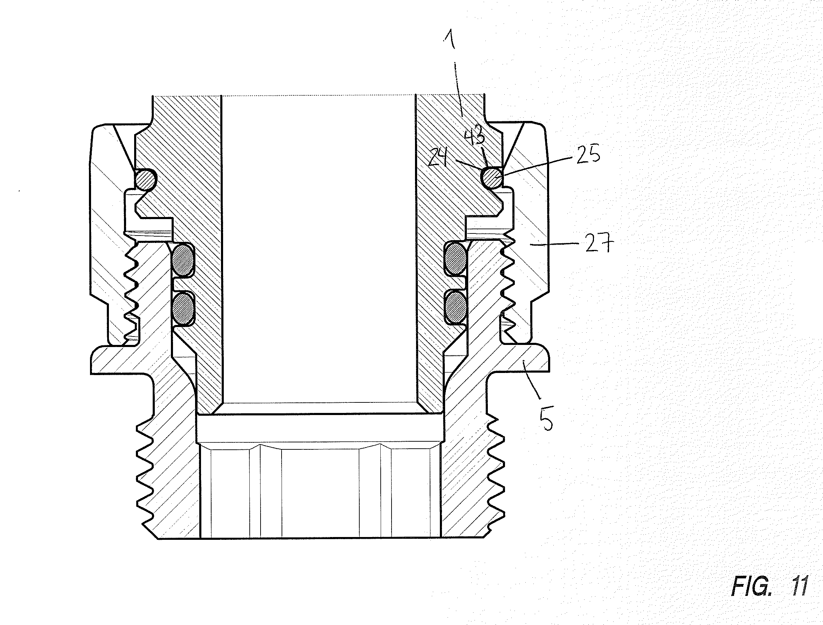

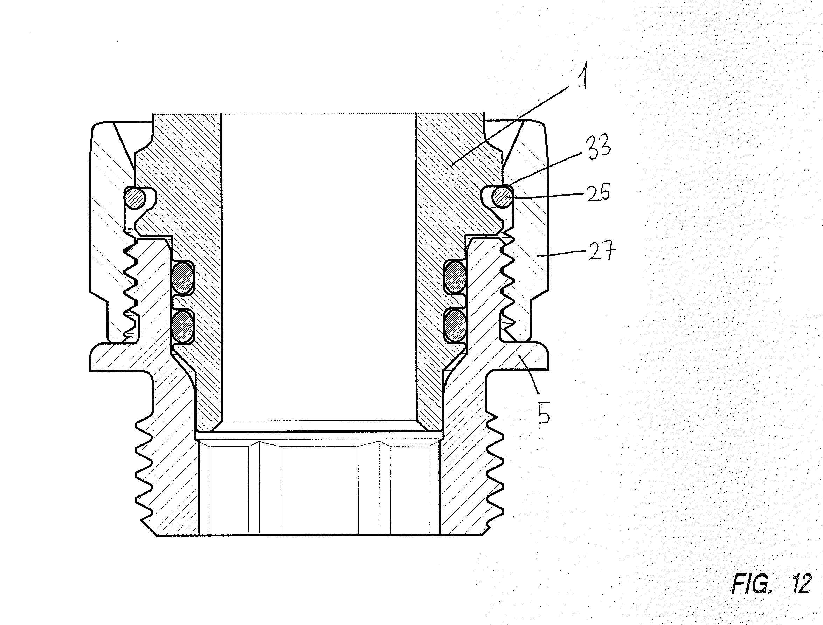

When the section 16 of the pipe stub 1 has entered the boring 11 of the adapter, as shown in figure 10, the pipe stub 1 can be led into the adapter until the conical section 41 of the pipe stub encounters the conical section 12 of the adapter, as shown in figure 12. During this insertion, the locking ring 25 will meet the walls in the conical boring 45 of the nut 27, as shown in figure 10, and be forced inward in the groove 24, as shown in figure 11. The locking ring will then lie against the upper wall 43 of the groove 24 and be forced downwards with this help of this.

When the locking ring 25 has come through the conical boring 45, it will expand by its own spring force and lie against the nut 27 on the underside of the shoulder 33, as shown in figure 12.

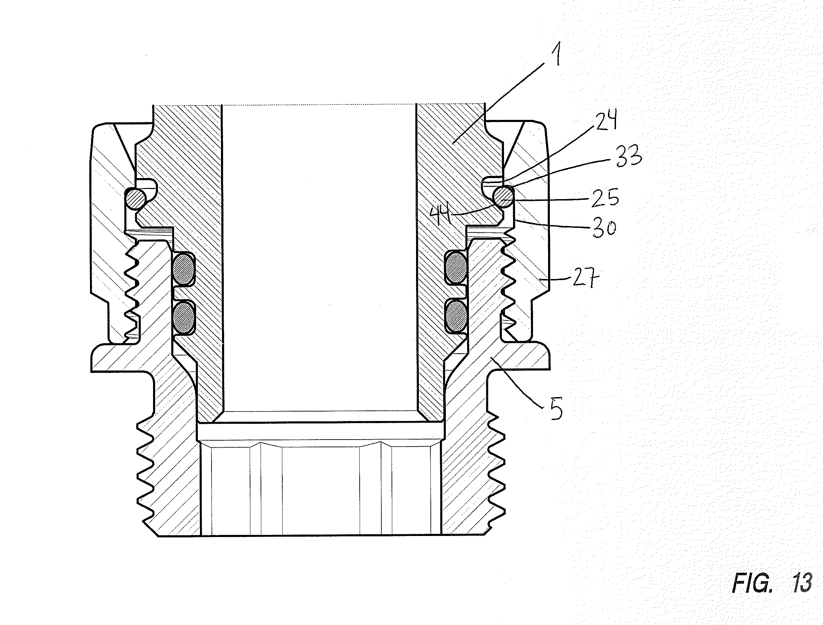

When the tank is pressurised, the pressure will ensure that the valve housing is somewhat lifted with regard to the adapter 5, as shown in figure 13. The locking ring 25 will then be squeezed between the lower wall 44 of the groove 24 and the shoulder 33 on the underside of the flange 31 of the nut. Because of the conical form of the wall 44, the locking ring 25 will be forced outwards and to a secure engagement with the shoulder 33 and the wall section 30 of the nut. In this way the locking ring is influenced by two opposite forces, a first force from the wall 44 that works diagonally upwards and outwards and an opposite directed force that works from the shoulder 33 and the wall 30 diagonally downwards and inwards. Thus, it is ensured that the locking ring 25 is in secure engagement with the groove 24 and the nut 27, and the connection has no possibility of becoming loose.

In the same way as in the embodiment according to figure 1, the nut 27 must be made loose if the pipe stub 1 shall be released from the adapter 5. The valve housing with the pipe stub 1 can thereby be pulled out of the adapter 5, as shown in figure 14. The locking ring 25 will still sit in the groove 24 and before the valve is fitted again, it can, if necessary, be flipped out of the groove 24. However, it is possible to fit the valve while the nut 27 sits on the pipe stub 1. The fitting will then be in the same way is in a traditional valve connection.

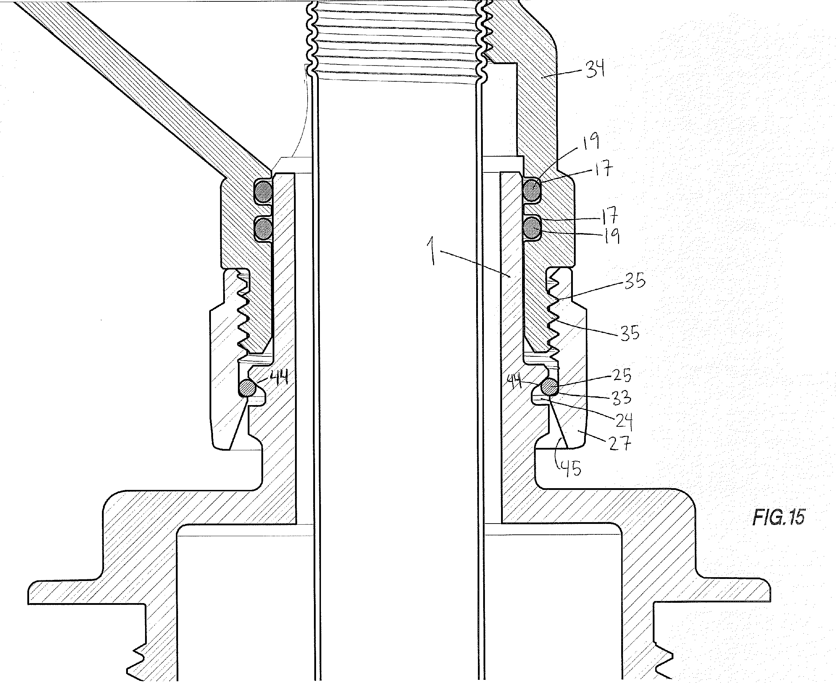

Figure 15 shows a fifth embodiment of the invention. The principles for this embodiment are the same as for the embodiment above. This embodiment does also have substantially the same characteristics as the previous embodiment and is similarly preferred. Only the differences in relation to the previous embodiment will be explained, as a person skilled in the art will understand that in all respects this fifth embodiment will have the same features as in the previous embodiment. Here the adapter 5 that shall be fastened to the tank is fitted with a pipe stub 1. This comprises a groove 24 for a locking ring 25. The valve housing is fitted with a holder 34 that, externally, has a threaded section 35 and, internally, has a groove 17 for O-ring 19. A nut 27 is screwed onto the threaded section 35 and the locking ring 25 is placed in the groove 24. The pipe stub 1 is thereafter led into the holder until the locking ring 25 snaps into place behind the shoulder 33 of the nut 27. Here, the locking ring will prevent disconnection in the same way as in the embodiment according to the figures 9 -14.

For the embodiments according to the figures 9 - 15, there are no recesses on the inside of the flange 31 of the nut 27. This has no consequence for the shape of the locking ring 25 with circular or, in another way, rounded cross section and the conical side wall 44, which together ensure that the locking ring does not unintentionally come out of the engagement.

Instead of having a threaded connection between the nut and the adapter and the holder, respectively, the nut in all the above mentioned embodiments can be fastened, for example, with the help of a bayonet connection, removable locking taps or an annular spring.

## Claims

1. Connection for connecting a fitting to a water heater or other type of pressure tank, comprising an adapter (5) for permanent fitting to the tank, where the adapter (5) and the fitting comprise complimentary formed parts, namely a first part (11, 8; 34) and a second part (1), which each has a through boring to provide a fluid connection between the tank and the fitting, and a nut (27) that is set up to be connected to the first part (11, 8; 34) so that it can be released, **characterised in that** the second part (1) comprises a locking groove (24) for engagement with a locking ring (25), said nut (27) being arranged to prevent the locking ring (25) moving axially in relation to the first part (11,8; 34), so that the second part is prevented from moving axially with respect to the first part (11, 8; 34).

2. Connection according to claim 1, **characterised in that** the first or the second part comprising seals (19, 20), preferably in the form of one or more O-rings.

3. Connection according to claims 1 or 2, **characterised in that** the nut (27) define a recess (32), to said recess (32) the locking ring (25) is arranged to be pushed when the connection is subjected to pressure, and that the recess (32) is formed so that when the locking ring (25) lies in the recess (32), the locking ring (25) is prevented from moving radially.

4. Connection according to one of the preceding claims, **characterised in that** the nut (25) defines a hollow space (30) into which the locking ring (25) can expand radially when the first and the second part are brought together.

5. Connection according to one of the preceding claims, **characterised in that** the second part (1) comprises a conical section (21) that is arranged to expand the locking ring (25) radially when the first part (11, 8; 34) and the second part (1) are brought together.

6. Connection according to one of the preceding claims, **characterised in that** the nut (27) comprises a conical section (45) that is arranged to compress the locking ring (25) radially when the first part (11, 8; 34) and the second part (1) are brought together.

7. Connection according to claim 6, **characterised in that** the nut (27) comprises a shoulder (33) behind which the locking ring (25) is arranged to enter into a locking engagement after it has passed the conical section (21) of the nut (27).

8. Connection according to one of the preceding claims, **characterised in that** the locking groove (24) has a side wall (44) that forms a predominantly conical surface which is oriented so that the surface, during axial loading of the second part, causes the expansion of the locking ring (25) and forces the locking ring against the nut (27).

9. Connection according to one of the preceding claims, **characterised in that** the locking ring has a predominantly rounded cross section, for example, a circular cross section.

10. Connection according to one of the preceding claims, **characterised in that** the second part (1) comprises a guiding section (14, 41) which, in cooperation with the nut (27) and/or a boring section (10) of the first part (11, 8; 34) is set up to centre the second part (1) in relation to the first part (11, 8; 34) when the parts are brought together.

11. Part of a connection according to one of the preceding claims, **characterised in that** it comprises a holder (11, 8; 34), a nut (27) and a locking ring (25), said holder (11, 8; 34) being fitted with means (8) to retain the nut (27) so that it can be released, said nut (27) has a radially inwardly directed flange (31) as the locking ring (25) is arranged to enter into engagement with the nut between the flange (31) and the holder (11, 8; 34).

12. Part of a connection according to one of the preceding claims, **characterised in that** it comprises a pipe stub (1) and a locking ring (25), as the locking ring (25) is arranged to enter into engagement with a radially inwardly directed flange (31) on a nut (27) to retain the nut (27) axially in relation to the pipe stub (1).
